Europäisches Patentamt

European Patent Office

Office européen des brevets

(19)

(11) Publication number: **0 140 659**
A2

# EUROPEAN PATENT APPLICATION

(12)

(21) Application number: 84307207.5

(22) Date of filing: 19.10.84

(51) Int. Cl.⁴: **B 25 J 17/02,** B 25 J 9/04

(30) Priority: 19.10.83 GB 8327937

(43) Date of publication of application: 08.05.85
Bulletin 85/19

(84) Designated Contracting States: **AT BE CH DE FR GB IT LI NL SE**

(71) Applicant: **Colne Robotics Co. Ltd., Beaufort Road, off Richmond Road, East Twickenham Middlesex TW1 2PQ (GB)**

(72) Inventor: **Ouroussoff, Nicholas Eustace Paul, Station Avenue, Kew Gardens Richmond Surrey (GB)**

(74) Representative: **Simpson, Ronald Duncan Innes et al, A.A.Thornton & Co. Northumberland House 303-306 High Holborn, London WCIV 7LE (GB)**

(54) Robotic arm assemblies.

(57) A robotic arm has a set of coaxial drives extending through the forearm (4) to the wrist (7), including a drive (D43) for rotating a hand operating spindle (9) through drive gearing (D45–D49) housed in the wrist. The wrist construction is simplified by virture of it being connected to the forearm at an axis (DD) transverse to the forearm axis (FF).

0140659

- 1 -

Robotic arm assemblies

This invention relates to mechanical handling apparatus, and more specifically to so-called "robotic-arms", that are programmed to perform functions conventionally performed by hand. Such functions include the manipulation and transportation of parts, tools, or specialised manufacturing implements through variable programmed motions for the performance of specific manufacturing tasks. A common task, for example, is the handling of components or workpieces for the purpose of sorting them into selected batches.

The invention is particularly concerned with the transmission of a number of independent drives to the "wrist" of a robotic arm to produce desired movements of the "hand".

For this purpose it is known to take a plurality of co-axial drives through the forearm to effect, respectively; rotation of the wrist about a first axis extending longitudinally of the forearm; rotation of the wrist about a second axis transverse to the first axis; and rotation of a hand flange about a third axis transverse to the second axis.

Prior proposals of which we are aware have been undesirably complicated in two main respects. First, it has been necessary to provide a wrist in two parts, one connected to the forearm for rotation about the first axis, and the other independently connected to the first part at the second axis. Secondly, operation of the hand assembly to be mounted on the hand flange has been effected by some form of motor provided in the hand assembly and to which a suitable power supply must be connected.

The present invention provides a robotic arm in which these problems are overcome in a simple but effective manner.

The invention is mainly characterized by the fact that the wrist is connected to the forearm at the said second axis, and that an additional drive extends through the forearm and through drive gearing in the wrist to a hand operating spindle rotatable relative to the hand flange about the said third axis.

With this arrangement, the wrist can be of relatively simple construction and the drive gearing for the hand operating spindle is easily accommodated in the wrist.

In a preferred arrangement offering optimum simplicity, the three said axes are coincident with each other at a common point.

A robotic arm assembly in accordance with the invention will now be described, by way of example, with reference to the accompanying drawings in which:

Figure 1 is a somewhat diagrammatic perspective view of a robotic arm in accordance with the invention, and

Figure 2 is a schematic sectional view illustrating the drive arrangements.

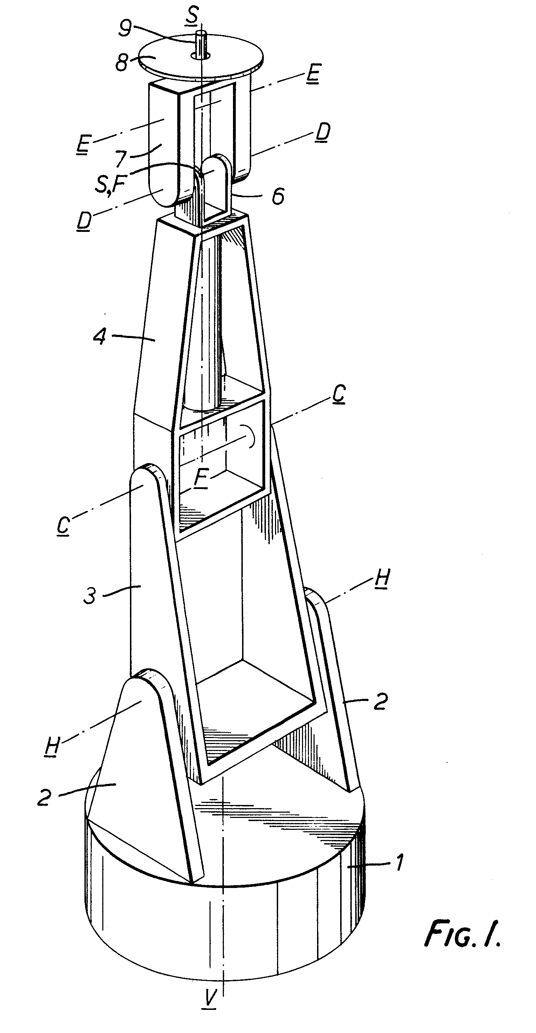

In Figure 1, the bulk of the drive components are omitted in the interest of clarity.

The robotic arm comprises a base 1 which is rotatable about a vertical axis V, and which carries a pair of shoulder supports 2 in which an upper arm member 3 is supported for rotation about a horizontal axis H. A forearm member 4 is supported at the upper end of the member 3 for rotation about a horizontal elbow axis CC.

At its outer end, the forearm member 4 carries a stirrup 6 which is rotatable about the longitudinal forearm axis FF, and the stirrup in turn supports a wrist member 7 for rotation about a transverse axis DD, and the wrist member provides a drive axis EE parallel with the axis DD.

A hand flange 8 is rotatably mounted at the outer end of the wrist member and a concentric spindle 9 projects through the flange. A hand or gripper (not shown) may be mounted on and rotated by the hand flange, and the spindle provides a drive for the actuation, (e.g. opening and closing) of the fingers or gripper. The flange 8 and spindle 9 are independently rotatable about an axis SS which is fixed in relation to the wrist member 7. As shown in the drawings, the axis SS is aligned with the forearm axis FF, but intersects that axis at an angle when the wrist member 7 is displaced about axis DD.

Positioning and rotation of the main components about the axes V, HH and CC are effected in known manner by individually controlled electric motors and do not require detailed description.

The drive arrangements with which the present invention is concerned are:

1. Rotation of the stirrup 6 to effect wrist rotation about the axis FF;

2. Rotation of the wrist member 7 about axis DD;

3. Rotation of the hand flange 8 about axis SS; and

4. Rotation of the spindle 9 about axis SS.

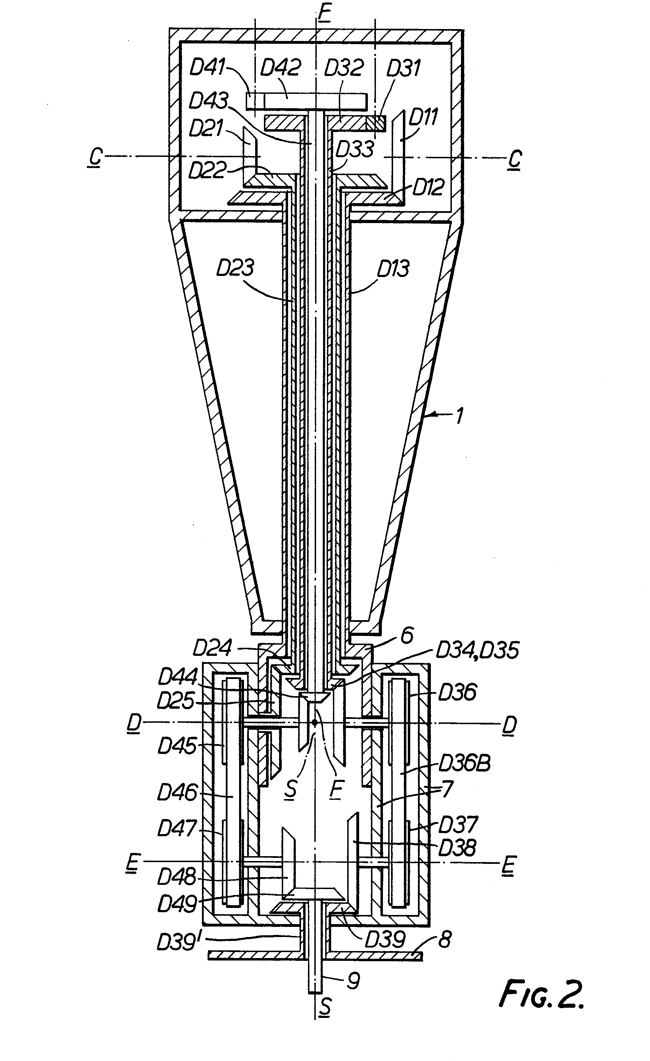

These drives are all independent of each other and are derived from respective electric motors, not shown, whose drive pinions are shown in Figure 2 as D11, D21, D31 and D41, respectively, the prefixes D1, D2, D3 and D4 being used below to identify the individual transmission chains with which respective components are associated.

Thus, drive pinion D11 meshes with bevel gear D12 which is fast with drive tube D13, fast in turn at its outer end with stirrup 6.

Drive pinion D21 meshes with bevel gear D22 fast with drive tube D23, the upper end of which carries a bevel pinion D24 meshing with a bevel gear D25 concentric with axis DD and fast with the wrist member 7.

Drive pinion D31 meshes with gear D32 fast with drive tube D33 which carries at its upper end a bevel pinion D34. This pinion meshes with a bevel gear D35 on a spindle journalled on the axis DD by the wrist member and having at its outer end a toothed wheel D36. A toothed belt D36B transmits rotation of gear D35 and wheel D36 to a second toothed wheel D37 and bevel gear D38 journalled for rotation about the axis EE, which is a drive axis only. Gear D38 drives a bevel pinion D39 fast with a sleeve D39' fast in turn with the hand flange 8.

Finally, the drive to spindle 9 comprises gears D41, D42, drive tube D43, bevel pinion D44, toothed wheel D45, belt D46, toothed wheel D47 and bevel gear D48 (both on axis EE) and bevel gear D49 fast with the spindle 9.

It will therefore be seen that the four drives are brought out from the elbow region of forearm member 4 through the concentric drive tubes D13, D23, D33 and shaft D43, which provides a very compact drive arrangement through the forearm.

The drive arrangement permits the individual

- 5 -

drive motors to be mounted at the elbow region of the forearm member below the elbow axis CC, thus enabling the weights of the motors to be employed to counterbalance the weight arm, wrist and hand.

The arm and its components may be of relatively light weight and simple construction. The various gears and toothed wheels lend themselves very well to moulding from rigid synthetic resin materials.

It will be noted in particular that the wrist 7 essentially comprises a single housing mounted on the stirrup 6 at the axis DD which is coincident at a common point with axes FF and SS. Thus, there is no need to form the wrist itself of separate housings which require connecting together, and the additional drive gearing required to operate the spindle 9 is easily accommodated.

Those skilled in the art will appreciate that although reference is made above to electric motors, the various drives may alternatively be derived from other sources, such as hydraulic or pneumatic pressure.

- 6 -

Claims:

1.      A robotic arm assembly comprising a forearm,
a wrist carried by the forearm and a hand flange carried
by the wrist, the forearm including first, second and
third coaxial drives for effecting, respectively:
rotation of the wrist about a first axis extending
longitudinally of the forearm; rotation of the wrist
about a second axis transverse to the first axis; and
rotation of the hand flange about a third axis transverse to the second axis,

        characterized in that the wrist (7) is
connected to the forearm (4) at the said second axis
(DD) and that an additional drive (D43) extends through
the forearm (4) and through drive gearing (D24 and D45
to D49) to a hand operating spindle (9) rotatable
relative to the hand flange (8) about the said third
axis (SS).

2.      A robotic arm assembly according to claim 1,
characterized in that the said first, second and third
axes (FF, DD and SS) are coincident with each other at
a common point.

0140659

FIG. I.

0140659

FIG. 2.